# EUROPÄISCHE PATENTSCHRIFT

(11) **EP 2 118 505 B1**
(45) Veröffentlichungstag und Bekanntmachung des Hinweises auf die Patenterteilung: **22.06.2011**
(21) Anmeldenummer: 08707398.7
(22) Anmeldetag: 30.01.2008
(51) Int. Cl.: F16D 1/06, F16D 1/072, B23P 11/00

(54) **WELLEN-NABENVERBINDUNG MIT VERZAHNUNG**
SHAFT-HUB CONNECTION WITH TOOTHING
LIAISON ARBRE-MOYEU DENTÉE

(30) Priorität: 31.01.2007 DE 102007005667
(43) Veröffentlichungstag der Anmeldung: 18.11.2009
(73) Patentinhaber: Wittenstein AG, 97999 Igersheim (DE)
(72) Erfinder: LANG, Walter, 97999 Igersheim (DE); MELBER, Karl-Georg, 97990 Weikersheim (DE); OLD, Christof, 97980 Bad Mergentheim (DE)
(74) Vertreter: Weiss, Peter
(86) Internationale Anmeldenummer: PCT/EP2008/000699
(87) Internationale Veröffentlichungsnummer: WO 2008/092648

(56) Entgegenhaltungen:
- DE-A1- 19 517 258
- DE-B3- 10 302 072

## Beschreibung

Die Erfindung betrifft ein Verfahren zur Herstellung einer Wellen-Nabenverbindung zwischen einem schrägverzahnten Ritzel und einer Nabe sowie eine geeignete Wellen-Nabenverbindung hierzu und deren Verwendung.

Die Bezeichnung "Wellen-Nabenverbindung" wird bei der vorliegenden Erfindung als allgemeiner Begriff verwendet und umfasst die unterschiedlichsten Varianten wie für Welle z.B. Ritzel, Bolzen, Schaft und dgl. bzw. wie für Nabe z.B. Steckhülse, Planetenradträger und dgl..

Es ist bekannt, ein Ritzel mit einem Schaft in einem Aufnahmeteil derart zu befestigen, indem der Ritzelschaft mit einem geradverzahnten oder speziell gerändeltem Teilabschnitt in eine Bohrung des Aufnahmeteils zentrisch gepresst wird, wobei sich dabei der verzahnte Teilabschnitt in die Bohrungswandung schneidet. In der DE 195 17 258 A1 ist beispielsweise eine derartige Ritzelbefestigung beschrieben. Hierbei ist jedoch das eigentliche Ritzel nicht mit seiner Laufverzahnung an der Nabenverbindung beteiligt, sondern lediglich der Ritzelschaft, was bedeutet, dass die Größenverhältnisse zwischen den Durchmessern Ritzel/Ritzelschaft merklich unterschiedlich sind. Die bei einer derartigen Verbindung angestrebte Zentriergenauigkeit soll dabei dadurch erhalten werden, dass der geradverzahnte Abschnitt des Ritzelschaftes beim Einpressen in eine entsprechende Bohrung des Aufnahmeteils gleichzeitig vor und hinter diesem Abschnitt zentrisch in der Bohrung geführt wird.

Eine derartige Wellen-Befestigung hat sich durchaus bewährt, jedoch setzt sie ein bestimmtes Durchmesserverhältnis Ritzel/Ritzelschaft voraus, um eine ausreichende Torsionsfestigkeit zu erhalten.

Demgegenüber liegt der vorliegenden Erfindung die Aufgabe zugrunde, insbesondere für schrägverzahnte Ritzel mit einem relativ kleinen Kopfkreisdurchmesser, d.h. < 150 mm, ein Verfahren zur Herstellung einer Verbindung mit einer Nabe zu schaffen, die eine spielfreie Befestigung hoher Präzision einerseits und eine hohe Torsionsfestigkeit andererseits gewährleistet. Ferner ist eine geeignete insbesondere Ritzel-Nabenverbindung aufzuzeigen.

Die erste Teilaufgabe wird erfindungsgemäß in einfacher Weise dadurch gelöst, dass ein Teilabschnitt der schrägverzahnten Laufverzahnung des Ritzels beim Verbinden mit der Nabe als eine Art spanendes Schneidwerkzeug eingesetzt wird, indem sich der Teilabschnitt axial fluchtend mit den Profilen seiner Zähne in die Nabe einschneidet.

Hierbei erfolgt das Verbinden zwischen dem Teilabschnitt der schrägverzahnten Laufverzahnung des Ritzels und der Nabe derart, indem der Teilabschnitt in die Nabe geführt eingepresst oder eingefügt wird, wobei es wegen der Steigung der Schrägverzahnung zweckmäßig ist, dass das Einpressen bzw. Einfügen relativ durchgeführt wird. Dabei wird die angestrebte axial fluchtende Verbindung zweckmäßigerweise dadurch erreicht, indem der Teilabschnitt der Laufverzahnung des Ritzels axial an einer Seite und durch diesen selbst zentriert zwangsgeführt wird. Im Falle eines rotativen Einpressens ist es hilfreich, dass der Teilabschnitt der Laufverzahnung des Ritzels an seinem freien axialen Ende durch einen Zentrierbolzen frei drehbar in der Nabe gelagert ist, der dann trotz zentrischer Führung der rotativen Bewegung folgen kann.

Das formschlüssige Einschneiden des als eine Art Schneidwerkzeug eingesetzten Teilabschnitts der Laufverzahnung des Ritzels kann dadurch vorteilhaft erleichtert werden, wenn in die freie axiale Stirnfläche des Teilabschnitts eine hinterschnittene umlaufende Schneidfase eingearbeitet wird; hierbei hat sich ein Winkel von 7,5° bewährt, welcher jedoch auch zwischen 0° und 15° liegen kann.

Als zweite Teillösung der erfindungsgemäßen Aufgabe wird eine geeignete Wellen-Nabenverbindung vorgeschlagen, und zwar insbesondere eine solche zwischen einem schrägverzahnten Ritzel und einer Nabe. Diese zeichnet sich dadurch aus, dass das Ritzel mit einem Teilabschnitt seiner schrägverzahnten Laufverzahnung für eine Verbindung mit der Nabe in einer axialen Flucht formschlüssig in diese geschnitten ist, was durch ein Einpressen oder Einfügen des Teilabschnitts erreicht wird.

Konstruktiv kann der Teilabschnitt der schrägverzahnten Laufverzahnung des Ritzels zu seiner axialen Führung einerseits an seinem freien Ende koaxial einen Zentrierbolzen aufweisen und andererseits kann hierzu der Teilabschnitt selbst dienen, indem dessen Kopfkreisdurchmesser gegenüber der restlichen Laufverzahnung des Ritzels geringfügig kleiner ausgebildet ist.

Zum Einsatz kommen diese Führungselemente dann, wenn die zur Verbindung vorgesehene Nabe eine mehrstufige Bohrung aufweist, wobei es zweckmäßig ist, dass diese einzelnen Stufen der mehrstufigen Bohrung durch einen Eintrittsabschnitt als erster Zentrierabschnitt, einen Verbindungsabschnitt und einen Zentrierungsabschnitt, als zweiter Zentrierabschnitt gebildet sind. Dabei weisen diese Bohrungsabschnitte unterschiedliche axiale Längen auf und sie sind im jeweiligen Innendurchmesser unterschiedlich groß ausgebildet, und zwar nehmen diese in ihrer Größe in Einpressrichtung ab.

Was den Eintrittsabschnitt der mehrstufigen Bohrung der Nabe anbetrifft, so dient dieser als erstes Führungselement beim Verbindungsvorgang, wobei dieser Abschnitt in seiner axialen Länge im Verhältnis zur axialen Länge des nachfolgenden Verbindungsabschnitts relativ kurz ausgebildet werden kann und einen Innendurchmesser aufweist, der dem Durchmesser des Kopfkreises des Teilabschnitts der Laufverzahnung des Ritzels entspricht.

Bezüglich des Verbindungsabschnitts der mehrstufigen Bohrung in der Nabe genügt es, wenn dieser in seiner axialen Länge etwa der axialen Länge des Teilabschnitts der Laufverzahnung des Ritzels vermindert durch die axiale Länge des Eintrittsabschnitts entspricht, wobei der Innendurchmesser dieses Verbindungsabschnitts zweckmäßigerweise geringfügig kleiner ausgebildet wird als der Durchmesser des Kopfkreises des Teilabschnitts der Laufverzahnung des Ritzels, damit ein formschlüssiges spielfreies Einschneiden des Teilabschnitts des Ritzels in die Nabe erhalten wird.

Der dem Verbindungsabschnitt in Einpressrichtung folgende Zentrierabschnitt besitzt vorteilhaft Abmessungen, die mit denen des am an dem freien Ende des Teilabschnitts des Ritzels koaxial vorgesehenen Zentrierbolzen korrespondieren.

Zum leichteren Einschneiden des Teilabschnitts des Ritzels in den Verbindungsabschnitt der mehrstufigen Nabenbohrung kann an der freien Stirnringfläche des Teilabschnitts der schrägverzahnten Laufverzahnung des Ritzels eine umlaufende Schneidfase vorgesehen sein, die vorteilhaft gegenüber der Stirnringfläche mit einem Winkel zwischen 0° und 15°, insbesondere 7,5°, hinterschnitten ist.

Das eingangs beschriebene Verfahren zur Herstellung einer Wellen-Nabenverbindung eignet sich insbesondere für die Herstellung der aufgezeigten Ritzel-Nabenverbindung, wobei letztere bevorzugt bei Ritzeln mit einem Durchmesser des Kopfkreises < 150 mm, insbesondere < 50 mm, bevorzugt < 20 mm zur Anwendung kommen kann. Bei diesen Abmessungen und dem Vorliegen praktisch einer Vollwelle zum Übertragen von Drehmomenten, d.h. keine Unterteilung in Ritzel und Ritzelschaft, können insbesondere bei höheren Torsionsbelastungen keine schädlichen Spannungsspitzen (Kerbspannungen) auftreten, wie dies bei abgesetzten Wellen der Fall sein kann.

Ferner soll im Rahmen der vorliegenden Erfindung liegen, dass bevorzugt der erste Teilabschnitt der schräg verzahnten Laufverzahnung des Ritzels zylindrisch oder aber auch in einem positiven oder negativen Freiwinkel α1, α2 von -5° bis +5°. Somit kann der Teilabschnitt mit schräg verzahnter Laufverzahnung konisch zum eigentlichen Ritzel verjüngt oder erweitert leicht ausgebildet sein, um einen Freiwinkel zu bilden, um insbesondere ein Einschneiden bzw. ein Einschneideprozess zu optimieren bzw. zu beeinflussen. Bei der verjüngten Ausführungsform wird ein Freiwinkel gebildet, so dass die Einschneidkräfte minimiert sind, bei der konisch nach aussen erweiterten Ausführungsform wären die Einschneidkräfte am Anfang geringer erwachsen, während des vollständigen Einschneidens und Einpressens in Abhängigkeit des Freiwinkels α1, α2 kontinuierlich an. Weitere Merkmale und Vorteile der vorliegenden Erfindung ergeben sich aus der nachfolgenden Beschreibung bevorzugter Ausführungsbeispiele sowie anhand der Zeichnung; diese zeigt in
- Fig. 1: einen Schnitt durch einen in die mehrstufige Bohrung eines Nabenabschnitts vollständig eingefügten Teilabschnitt eines Ritzels;
- Figur 2: einen Schnitt durch ein weiteres Ausführungsbeispiel gemäss Figur 1.

Bei der dargestellten Wellen-Nabenverbindung handelt es sich speziell um eine Ritzel-Nabenverbindung 1, bei der ein Ritzel 2 mit einem Teilabschnitt 3 eine schrägverzahnte Laufverzahnung 4 aufweist, wobei das Ritzel 2 mit dem Teilabschnitt 3 in eine mehrstufige Bohrung 5 einer Nabe 6 eingepresst ist. Der Teilabschnitt 3 besitzt an seinem freien Ende koaxial einen Zentrierbolzen 7, der gegenüber der Stirnringfläche 3.1 des Teilabschnitts 3 durch einen Einstich 8 abgesetzt ist, wobei zwischen dem Teilabschnitt 3 und der restlichen Laufverzahnung 4 ein Einstich 9 vorgesehen ist, wodurch mögliche Kerbspannungen vermieden werden können.

An der freien Stirnringfläche 3,1 des Teilabschnitts 3 der schrägverzahnten Laufverzahnung 4 des Ritzels 2 befindet sich 2 um besseren Einschneiden des Teilabschnitts 3 eine umlaufende Schneidfase 10, die einen hinterschnittenen Winkel 11 von etwa 7,5° aufweist. Damit wirkt der Teilabschnitt 3 als eine Art Schneidwerkzeug.

Die mehrstufige Bohrung 5 der Nabe 6 ist aus einem Eintrittsabschnitt 12, einem Verbindungsabschnitt 13 und einem Zentrierungsabschnitt 14 zusammengesetzt. Hierbei besitzt der Eintrittsabschnitt 12 eine axiale Länge von etwa 30% des nachfolgenden Verbindungsabschnitts 13 und hat einen Innendurchmesser, der dem Durchmesser es Kopfkreises des Teilabschnitts 3 entspricht. Die axiale Länge des Eintrittsabschnitts 12 kann dabei je nach den Größenverhältnissen der Ritzel-Nabenverbindung zwischen 25 - 35% der axialen Länge des Verbindungsabschnitts 13 betragen. Der Eintrittsabschnitt 12 gehört zu dem angestrebten Konzept einer Mehrfachzentrierung an mindestens zwei Stellen, d. h. hier wird beim Eintauchen des Teilabschnitts 3 in den Verbindungsabschnitt 13 mittels der Schneidfase 10 das Ritzel 2 neben dem Zentrierbolzen 7 nochmals zentrisch zwangsgeführt, sodass eine drehsichere, axial fluchtende Verbindung zwischen dem Ritzel 2 und der Nabe 6 entsteht.

Der Verbindungsabschnitt 13 der mehrstufigen Bohrung 5 hat eine axiale Länge, die etwa der axialen Länge des Teilabschnitts 3, jedoch vermindert durch die axiale Länge des Eintrittsabschnitts 12 entspricht, wobei der Innendurchmesser des Verbindungsabschnitts 13 geringfügig kleiner ausgebildet ist (zwischen 5 und 10 %; bei dem vorliegenden Ausführungsbeispiel 7 %) als der Durchmesser des Kopfkreises des Teilabschnitts 3, damit genügend "Fleisch" vorhanden ist, in das sich die Zähne der Schrägverzahnung des Teilabschnitts 3 bei Spanbildung einschneiden können,

Der dem Verbindungsabschnitt 13 nachfolgende Zentrierabschnitt 14 ist schließlich entsprechend den Abmessungen des Zentrierungsbolzens 7 ausgebildet, und zwar mit einem Passsitz, der jedoch die bei einem rotativen Einpressen des schrägverzahnten Teilabschnitts 3 erforderliche Drehbewegung zwischen dem Zentrierbolzen 7 und dem Zentrierungsabschnitt 14 zulässt. Gleichzeitig wird durch den Zentrierbolzen 7 der Bereich wischen dem Ritzel 2 und der Nabe 6 abgedichtet.

Das erfindungsgemäße Verfahren zum Herstellen der erfindungsgemäßen Ritzel-Nabenverbindung 1 ist wie folgt: Beim Einschieben des Ritzels 2 in die mehrstufige Bohrung 5 erfolgt ein spanbildendes Einschneiden des Teilabschnitts 3 mit Hilfe der Schneidfase 10 in die Innenwandung des Verbindungsabschnitts 13 bei gleichzeitiger, bereits vor dem Beginn des Einschneidens gegebener Ritzelzentrierung durch das vorherige Eintauchen des Zentrierbolzens 7 in die Bohrung des Zentrierabschnitts 14 und das Eintauchen des Teilabschnitts 3 in die Bohrung des Eintrittsabschnitts 12. Dieses axial fluchtende Einschieben, d.h. dieser axiale Pressvorgang erfolgt mit einer Drehung des Ritzels 2 entgegen des Uhrzeigersinns entsprechend der Steigung der Schrägverzahnung solange, bis das Ritzel 2 mit seinem als eine Art Schneidwerkzeug dienenden Teilabschnitt 3 in der mehrstufigen Bohrung 5 versenkt ist.

Insgesamt erhält man durch das vorgeschlagene Verfahren und die vorgeschlagene Ritzel-Nabenverbindung insbesondere im Zusammenhang einer Schrägverzahnung eine verdrehsichere, spielfreie Befestigung eines Ritzels in einer Nabe, welche aufgrund seiner praktisch vollzylindrischen Ausführung in der Lage ist, höhere Drehmomente inklusiv Axialkräfte (durch die Schrägverzahnung) zu übertragen. Im Gegensatz zu einer Rändelverbindung ist durch die exakt definierte und bearbeitete Zahnform insbesondere bei der Schrägverzahnung eine besonders spielfreie und steife Wellen-Nabenverbindung mit hoher Präzision möglich, wobei gleichzeitig die Gefahr eines Abscherens an der Nabe oder eines Durchrutschens in der Nabe mit der vorliegenden Erfindung vorteilhaft nicht mehr gegeben ist.

Bei der vorliegenden Erfindung ist die schräg verzahnte Laufverzahnung 4 im Ritzel 2 durchgehend mit anschliessendem Teilabschnitt 3 gebildet. Zwischen Teilabschnitt 3 und Ritzel 2 kann lediglich ein Einstich 9 vorgesehen sein. Dies ist aber nicht zwingend erforderlich.

Die Laufverzahnung 4 schliesst einen Schrägungswinkel β von etwa 1° bis 30°, bevorzugt 6° bis 14° ein.

Die äussere Mantelfläche der Laufverzahnung 4 ist sowohl im Bereich des Ritzels 2 als auch im Bereich des Teilabschnittes 3 zylindrisch ausgeformt.

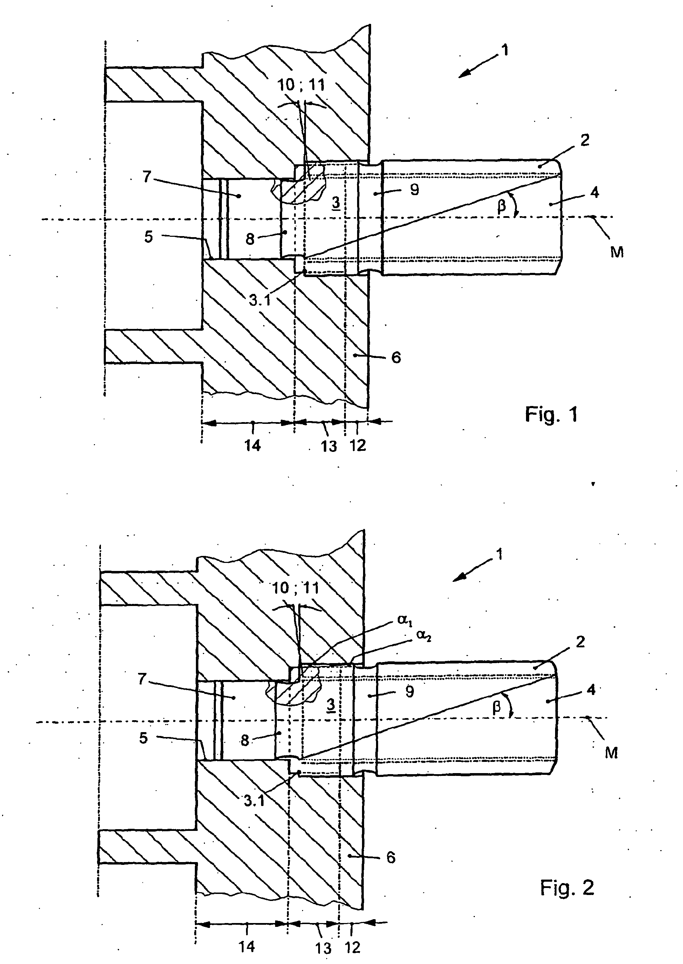

In manchen Anwendungsfällen hat es sich als vorteilhaft erwiesen, im Bereich des Teilabschnittes 3 die Laufverzahnung, insbesondere im Bereich der Mantelfläche mit einem positiven oder negativen Freiwinkel α₁, α₂ zu versehen, wie es beispielsweise in Figur 2 angedeutet ist. Bei α₁ ist ein negativer Freiwinkel von 0° bis -5° und bei α₂ ein positiver Freiwinkel von 0° bis +5° aufgezeigt bzw. angedeutet. Somit kann sich die äussere Mantelfläche entweder konisch zum Ritzel 2 hin verjüngen oder konisch nach aussen hin erweitern bzw. konisch zum Zentrierbolzen 7 hin verjüngen. Auf diese Weise lässt sich Einfluss nehmen auf ein Einschneidverhalten und insbesondere auf ein Einschneid- und ein Pressvorgang, so dass Anfangskräfte und Presskräfte minimiert sind und zu Beginn ein Einschneiden optimiert ist.

Durch die Gestaltung des negativen Freiwinkels α₁, α₂ kann es auch von Vorteil sein, ein Einschneidverhalten wesentlich zu optimieren. Dies soll ebenfalls im Rahmen der vorliegenden Erfindung liegen.

Vorzugsweise ist die umlaufende Schneidfase 10 gegenüber der Stirnringfläche 3.1 mit einem Winkel 11 < 15 °, insbesondere 7,5 °, hinterschnitten.

Vorzugsweise weist die Nabe 6 zur Aufnahme des Teilabschnitts 3 der Laufverzahnung 4 des Ritzels 2 eine mehrstufige Bohrung 5 auf.

Vorzugsweise sind die einzelnen Stufen der mehrstufigen Bohrung 5 durch einen Eintrittsabschnitt 12 als erster Zentrierabschnitt, einem Verbindungsabschnitt 13 und einem Zentrierungsabschnitt 14 als zweiter Zentrierabschnitt gebildet, wobei diese Bohrungsabschnitte 12-14 unterschiedliche axiale Längen aufweisen und im jeweiligen Innendurchmesser unterschiedlich groß ausgebildet sind.

Vorzugsweise ist der Eintrittsabschnitt 12 der mehrstufigen Bohrung 5 der Nabe 6 in seiner axialen Länge im Verhältnis zur axialen Länge des nachfolgenden Verbindungsabschnitt 13 relativ kurz ausgebildet und weist einen Innendurchmesser auf, der dem Durchmesser des Kopfkreises des Teilabschnitts 3 der Laufverzahnung 4 des Ritzels 2 entspricht.

Vorzugsweise dient neben dem Zentrierungsbolzens 7 der Eintrittsabschnitt 12 der mehrstufigen Bohrung 5 zur ersten Zentrierung des Ritzels 2.

Vorzugsweise entspricht der Verbindungsabschnitt 13 der mehrstufigen Bohrung 5 in seiner axialen Länge etwa der axialen Länge des Teilabschnitts 3 der Laufverzahnung 4 des Ritzels 2 vermindert durch die axiale Länge des Eintrittsabschnitts 12 der mehrstufigen Bohrung 5. Vorzugsweise ist der Innendurchmesser des Verbindungsabschnitts 13 der mehrstufigen Bohrung 5 geringfügig kleiner ausgebildet als der Durchmesser des Kopfkreises des Teilabschnitts 3 der Laufverzahnung 4 des Ritzels 2.

Vorzugsweise korrespondieren der dem Verbindungsabschnitt 13 nachfolgende Zentrierungsabschnitt 14 in seinen Abmessungen mit denen des an dem freien Ende des Teilabschnitts 3 der schrägverzahnten Laufverzahnung 4 des Ritzels 2 koaxial vorgesehenen Zentrierungsbolzens 7.

Vorzugsweise schliesst die Laufverzahnung 4 einen Schrägungswinkel (β) zu einer Mittelachse (M) von 1° bis 30°, insbesondere 6° bis 14° ein.

Vorzugsweise schliesst die schräg verzahnte Laufverzahnung 4 im Bereich des Teilabschnittes 3 im Bereich der äusseren Mantelfläche einen Freiwinkel (α₁, α₂) zur Mantelfläche des Ritzes 2 ein, der im Bereich von -5° bis +5° liegt.

Weiterhin wird Schutz begehrt für eine Verwendung des Verfahrens zur Herstellung einer Wellen-Nabenverbindung 1.

Vorzugsweise ist die Verwendung des Verfahrens zur Herstellung einer Wellen-Nabenverbindung, insbesondere zwischen einem schrägverzahnten Ritzel und einer Nabe und erstreckt sich insbesondere auf Ritzel 2 mit einem Durchmesser des Kopfkreises < 150 mm, insbesondere < 50 mm, vorzugsweise < 20 mm.

Weiterhin wird Schutz begehrt für eine Verwendung einer Wellen-Nabenverbindung, insbesondere zwischen einem schrägverzahnten Ritzel und einer Nabe, wobei sich die Verwendung insbesondere auf Ritzel 2 mit einem Durchmesser des Kopfkreises < 150 mm, insbesondere < 50 mm, vorzugsweise < 20 mm erstreckt.

### Bezugszeichenliste

| | | | | | |
|---|---|---|---|---|---|
| 1 | Ritzel-Nabenverbindung | 34 | | 67 | |
| 2 | Ritzel | 35 | | 68 | |
| 3 | Teilabschnitt | 36 | | 69 | |
| 3.1 | Stirnringfläche | | | | |
| 4 | Laufverzahnung | 37 | | 70 | |
| 5 | mehrst. Bohrung | 38 | | 71 | |
| 6 | Nabe | 39 | | 72 | |
| 7 | Zentrierbolzen | 40 | | 73 | |
| 8 | Einstich | 41 | | 74 | |
| 9 | Einstich | 42 | | 75 | |
| 10 | Schneidfase | 43 | | 76 | |
| 11 | hinterschn. Winkel | 44 | | 77 | |
| 12 | Eintrittsabschnitt | 45 | | 78 | |
| 13 | Verbindungsabschnitt | 46 | | 79 | |
| 14 | Zentrierungsabschnitt | 47 | | | |
| 15 | | 48 | | | |
| 16 | | 49 | | α₁ | Freiwinkel |
| 17 | | 50 | | α₂ | Freiwinkel |
| 18 | | 51 | | β | Schrägungswinkel |
| 19 | | 52 | | | |
| 20 | | 53 | | | |
| 21 | | 54 | | M | Mittelachse |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Herstellung einer Wellen-Nabenverbindung zwischen einem schrägverzahnten Ritzel und einer Nabe, **dadurch gekennzeichnet, dass** ein Teilabschnitt (3) der schrägverzahnten Laufverzahnung (4) des Ritzels (2) beim Verbinden mit der Nabe als eine Art spanendes Schneidwerkzeug eingesetzt wird, indem sich der Teilabschnitt (3) axial fluchtend mit den Profilen seiner Zähne in die Nabe (2) einschneidet.

2. Verfahren nach Anspruch 1, **dadurch gekennzeichnet, dass** das Ritzel (2) mit seinem als eine Art spanendes Schneidwerkzeug eingesetzten Teilabschnitt (3) in die Nabe (6) mindestens einfach, insbesondere zweifach geführt eingepresst oder eingefügt wird.

3. Verfahren nach Anspruch 2, **dadurch gekennzeichnet, dass** das Einpressen oder Einfügen des als eine Art Schneidwerkzeug eingesetzten Teilabschnitts (3) der Laufverzahnung (4) des Ritzels (2) in die Nabe (6) entsprechend der Flankenrichtung der Schrägverzahnung drehend durchgeführt wird.

4. Verfahren nach den Ansprüchen 1 bis 3, **dadurch gekennzeichnet, dass** der als eine Art Schneidwerkzeug dienende Teilabschnitt (3) der Laufverzahnung (4) des Ritzels (2) beim Verbinden mit der Nabe (6) zwangsgeführt wird.

5. Verfahren nach Anspruch 4, **dadurch gekennzeichnet, dass** der Teilabschnitt (3) mit der Laufverzahnung (4) des Ritzels (2) beim Verbinden mit der Nabe (6) axial über seine äussere Mantelfläche zentriert wird,

6. Verfahren nach Anspruch 5, **dadurch gekennzeichnet, dass** den Teilabschnitt (3) der Laufverzahnung (4) des Ritzels (2) beim Verbinden mit der Nabe (6) an seinem freien axialen Ende durch einen Zentrierbolzen (7) frei drehbar in der Nabe (6) gelagert wird, wobei eine Führung des Ritzels (2) an beiden freien axialen Enden beim Einfügen zum Zentrieren dient, indem einends der Zentrierbolzen (7) gegenüber einer Bohrung (5) fluchtet und andernends das Ritzel (2) und das Presswerkzeug gegenüber der Bohrung (5) eingesetzt ist,

7. Verfahren nach einem der Vorhergehenden Ansprüche 1 bis 6, **dadurch gekennzeichnet, dass** in die freie axiale Stirnfläche (3.1) des Teilabschnitte (3) der Laufverzahnung (4) des Ritzels (2) eine umlaufende Schneidfase (10) eingearbeitet wird.

8. Verfahren nach Anspruch 7, **dadurch gekennzeichnet, dass** die umlaufende Schneidfase (10) hinterschnitten mit einem Winkel (11) < 15 °, insbesondere 7,5 °, eingearbeitet wird.

9. Verfahren nach wenigstens einem der Ansprüche 6 bis 8, **dadurch gekennzeichnet, dass** vor oder während dem Einschneiden des Teilabschnittes (3) in die Bohrung (5) die Nabe (6) erwärmt wird.

10. Wellen-Nabenverbindung zwischen einem schrägverzahnten Ritzel und einer Nabe, **dadurch gekennzeichnet, dass** das Ritzel (2) mit einem Teilabschnitt (3) seiner schrägverzahnten Laufverzahnung (4) für die Verbindung mit der Nabe (6) in einer axialen Flucht formschlüssig in diese geschnitten ist.

11. Wellen-Nabenverbindung nach Anspruch 10, **dadurch gekennzeichnet, dass** das Ritzel (2) mit seinem Teilabschnitt (3) der schrägverzahnten Laufverzahnung (4) in die Nabe (6) eingepresst oder eingefügt ist.

12. Wellen-Nabenverbindung nach Anspruch 11, **dadurch gekennzeichnet, dass** der Teilabschnitt (3) der schrägverzahnten Laufverzahnung (4) des Ritzels (2) an seinem freien Ende koaxial einen Zentrierbolzen (7) aufweist.

13. Wellen-Nabenverbindung nach Anspruch 12, **dadurch gekennzeichnet, dass** der Durchmesser des Kopfkreises des Teilabschnitts (3) der schrägverzahnten Laufverzahnung (4) des Ritzels (2) gegenüber dem Durchmesser des Kopfkreises der restlichen Laufverzahnung (4) des Ritzels (2) geringfügig kleiner ausgebildet ist.

14. Wellen-Nabenverbindung nach Anspruch 13, **dadurch gekennzeichnet, dass** zwischen dem Teilabschnitt (3) der schrägverzahnten Laufverzahnung (4) des Ritzels (2) und der restlichen Laufverzahnung (4) des Ritzels (2) sowie dem Teilabschnitt (3) und dem Zentrierungsbolzen (7) jeweils ein Einstich (8 bzw. 9) vorgesehen ist.

15. Wellen-Nabenverbindung nach einem der Ansprüche 10 bis 14, **dadurch gekennzeichnet, dass** an der freien Stirnringfläche (3.1) des Teilabschnitts (3) der schrägverzahnten Laufverzahnung (4) des Ritzels (2) eine umlaufende Schneidfase (10) vorgesehen ist.

## Claims

1. Method for producing a shaft-hub connection between a helically toothed pinion and a hub, **characterised in that** a partial section (3) of the helically toothed running toothing (4) of the pinion (2) is used, during the connection to the hub, as a type of chip-removing cutting tool, by virtue of the fact that the partial section (3) cuts with the profiles of its teeth into the hub (2) in an axially aligned manner.

2. Method according to Claim 1, **characterised in that** the pinion (2) is pressed or inserted, with its partial section (3) used as a type of chip-removing cutting tool, into the hub (6) at least in a singly guided manner, in particular in a doubly guided manner.

3. Method according to Claim 2, **characterised in that** the pressing or insertion of the partial section (3), used as a type of cutting tool, of the running toothing (4) of the pinion (2) into the hub (6) is carried out with rotation corresponding to the flank direction of the helical toothing.

4. Method according to Claims 1 to 3, **characterised in that** the partial section (3), serving as a type of cutting tool, of the running toothing (4) of the pinion (2) is guided in a constrained manner during the connection to the hub (6).

5. Method according to Claim 4, **characterised in that** the partial section (3) with the running toothing (4) of the pinion (2) is centred axially via its outer lateral surface during the connection to the hub (6).

6. Method according to Claim 5, **characterised in that**, during the connection to the hub (6), the partial section (3) of the running toothing (4) of the pinion (2) is mounted freely rotatably at its free axial end in the hub (6) by means of a centring pin (7), guidance of the pinion (2) at both free axial ends during insertion serving for centring, by virtue of the fact that at one end the centring pin (7) is aligned with respect to a bore (5) and at the other end the pinion (2) and the pressing tool is set in with respect to the bore (5).

7. Method according to one of the preceding Claims 1 to 6, **characterised in that** a circumferential cutting bevel (10) is produced in the free axial end surface (3.1) of the partial section (3) of the running toothing (4) of the pinion (2).

8. Method according to Claim 7, **characterised in that** the circumferential cutting bevel (10) is produced with an undercut at an angle (11) of < 15°, in particular 7.5°.

9. Method according to at least one of Claims 6 to 8, **characterised in that** the hub (6) is heated before or during the cutting of the partial section (3) into the bore (5).

10. Shaft-hub connection between a helically toothed pinion and a hub, **characterised in that** the pinion (2) is cut, with a partial section (3) of its helically toothed running toothing (4), in a positively locking manner into the hub (6) in axial alignment for connection to the hub (6).

11. Shaft-hub connection according to Claim 10, **characterised in that** the pinion (2) is pressed in or inserted, with its partial section (3) of the helically toothed running toothing (4), into the hub (6).

12. Shaft-hub connection according to Claim 11, **characterised in that** the partial section (3) of the helically toothed running toothing (4) of the pinion (2) has coaxially a centring pin (7) at its free end.

13. Shaft-hub connection according to Claim 12, **characterised in that** the diameter of the tip circle of the partial section (3) of the helically toothed running toothing (4) of the pinion (2) is made slightly smaller than the diameter of the tip circle of the rest of the running toothing (4) of the pinion (2).

14. Shaft-hub connection according to Claim 13, **characterised in that** respectively one recess (8 and 9) is provided between the partial section (3) of the helically toothed running toothing (4) of the pinion (2) and the rest of the running toothing (4) of the pinion (2) and also between the partial section (3) and the centring pin (7).

15. Shaft-hub connection according to one of Claims 10 to 14, **characterised in that** a circumferential cutting bevel (10) is provided at the free end ring surface (3.1) of the partial section (3) of the helically toothed running toothing (4) of the pinion (2).

## Revendications

1. Procédé pour réaliser une liaison arbre-moyeu entre un pignon à denture oblique et un moyeu, **caractérisé par le fait qu'**un segment partiel (3) de la denture de fonctionnement oblique (4) du pignon (2) est utilisé, lors de la liaison avec le moyen, comme une sorte d'outil de coupe par enlèvement de copeaux, en ce que le segment partiel (3) pénètre par les profils de ses dents axialement et à fleur dans le moyeu (2).

2. Procédé selon la revendication 1, **caractérisé par le fait que** le pignon (2) est, par son segment partiel (3) utilisé comme une sorte d'outil de coupe par enlèvement de copeaux, pressé ou introduit dans le moyeu (6) de manière guidée au moins simple, en particulier double.

3. Procédé selon la revendication 2, **caractérisé par le fait que** le pressage ou l'introduction du segment partiel (3), utilisé comme une sorte d'outil de coupe par enlèvement de copeaux de la denture de fonctionnement (4), du pignon (2) dans le moyeu (6) s'effectue de manière rotative selon la direction des flancs de la denture oblique.

4. Procédé selon les revendications 1 à 3, **caractérisé par le fait que** le segment partiel (3), servant comme une sorte d'outil de coupe par enlèvement de copeaux, de la denture de fonctionnement (4) du pignon (2) est, lors de la liaison avec le moyeu (6), guidé de manière forcée.

5. Procédé selon la revendication 4, **caractérisé par le fait que** le segment partiel (3) avec la denture de fonctionnement (4) du pignon (2) est, lors de la liaison avec le moyeu (6), centré axialement sur sa surface d'enveloppe extérieure.

6. Procédé selon la revendication 5, **caractérisé par le fait que** le segment partiel (3) de la denture de fonctionnement (4) du pignon (2) est, lors de la liaison avec le moyeu (6), monté dans le moyeu (6), à son extrémité axial libre, par un boulon de centrage (7) de manière à pouvoir tourner librement, un guidage du pignon (2) aux deux extrémités axiales libre servant, lors de l'introduction, au centrage en plaçant, à une extrémité, le boulon de centrage (7) à fleur au droit d'un alésage (5) et, à l'autre extrémité, le pignon (2) et l'outil de pressage au droit de l'alésage (5).

7. Procédé selon l'une des revendications précédentes 1 à 6, **caractérisé par le fait que** dans la face frontale axiale libre (3.1) du segment partiel {3) de la denture de fonctionnement (4) du pignon (2) est usinée une phase de coupe continue (10).

8. Procédé selon la revendication 7, **caractérisé par le fait que** la phase de coupe continue (10) est usiné à contre-dépouille avec un angle (11) < 15°, en particulier 7,5°.

9. Procédé selon au moins l'une des revendications 6 à 8, **caractérisé par le fait qu'**avant ou pendant le découpage du segment partiel (3) dans l'alésage (5), le moyeu (6) est chauffé.

10. Liaison arbre-moyeu entre un pignon à dents obliques et un moyeu, **caractérisée par le fait que** le pignon (2) est par un segment partiel (3) de sa denture de travail à dents obliques (4) découpée, pour sa liaison avec le moyeu (6), en liaison de forme en alignement axial dans ce dernier.

11. Liaison arbre-moyeu selon la revendication 10, **caractérisé par le fait que** le pignon (2) est, par son segment partiel (3) de la denture de travail à dents obliques (4), pressé ou introduit dans le moyeu (6).

12. Liaison arbre-moyeu selon la revendication 11, **caractérisé par le fait que** le segment partiel (3) de la denture de travail à dents obliques (4) du pignon (2) présente, à son extrémité libre, coaxialement un boulon de centrage (7).

13. Liaison arbre-moyeu selon la revendication 12, **caractérisé par le fait que** le diamètre du cercle de tête du segment partiel (3) de la denture de travail à dents obliques (4) du pignon (2) est réalisé légèrement plus petit par rapport au diamètre du cercle de tête du reste de la denture de travail à dents obliques (4) du pignon (2).

14. Liaison arbre-moyeu selon la revendication 13, **caractérisé par le fait qu'**entre le segment partiel (3) de la denture de travail à dents obliques (4) du pignon (2) et le reste de la denture de travail (4) du pignon (2) ainsi qu'entre le segment partiel (3) et le boulon de centrage (7) est chaque fois prévue une piqûre (8 ou 9).

15. Liaison arbre-moyeu selon l'une des revendications 10 à 14, **caractérisé par le fait qu'**à la face frontale libre (3.1) du segment partiel (3) de la denture de travail à dents obliques (4) du pignon (2) est prévue une phase de coupe continue (10).
